# EUROPEAN PATENT APPLICATION

(11) **EP 4 365 547 A1**
(43) Date of publication of application: **08.05.2024**
(21) Application number: 23204133.5
(22) Date of filing: 17.10.2023
(51) Int. Cl.: G01C 5/06, G01C 21/00

(54) **BUILDING HEIGHT DETERMINATION**

(30) Priority: 01.11.2022 GB 202216214
(71) Applicant: Dense Air Limited, Marlow Buckinghamshire SL7 1EY (GB)
(72) Inventor: MURPHY, Luke, Marlow, SL71EY (GB); RUSSELL, Simon, Marlow, SL7 1EY (GB)
(74) Representative: D Young & Co LLP

(57) **Abstract**

A computer-implemented method for determining the height of a plurality of buildings in a region, the method comprising: retrieving a map of building locations in the region; retrieving a plurality of sensor data records from a plurality of mobile network devices, wherein each sensor data record comprises horizontal coordinate data and elevation data; processing the plurality of sensor data records and the map of building locations to generate a map set of building heights.

## Description

### FIELD AND BACKGROUND

The present techniques relate to determining the height of a plurality of buildings in a region. More particularly, the disclosure describes a method, computer program and device which processes a retrieved map of building locations in a region and a plurality of sensor data to generate a set of building heights.

In recent years the importance of big data has grown, both in the virtual and real-world. Such real-world data has become critical in a broad range of fields from climatic monitoring to mobile telecoms network operation. An important piece of data, in an urban context, is building height.

A number of techniques have been developed to determine the heights of buildings in a region. One approach has been to collate information on the heights using building plans, for example those filed with local government as part of the planning process. Another approach, has been to perform an aerial/satellite survey of a region using radar or visible wavelength processing.

However, as identified by the present inventors, each of these prior techniques have a number of downsides. For example, collating building height information using building plans is reliant on there being a readily available source of such data, for example at a municipal planning office, and requires a large amount of effort to accurately transcribe. In addition, such collation cannot take account of any deviations away from the building plans either during initial construction or during subsequent renovation. Aerial/satellite surveys, while having the potential to be largely automated, also have a number of significant downsides. For example, such surveys require access to expensive hardware and are reliant on good visibility at their chosen electromagnetic wavelength. In addition, as with the collation of building records, such data cannot easily be kept up to date since to spot changes in building heights, or the construction of new structures, the survey would have to be largely or completely re-performed.

Accordingly, as identified by the present inventors, it is desirable to provide an approach which allows for efficient determination of building heights in a region.

At least certain embodiments of the present disclosure address one or more of these problems as set out above.

### SUMMARY

Viewed from one perspective, there is provided a computer-implemented method for determining the height of a plurality of buildings in a region, the method comprising: retrieving a map of building locations in the region; retrieving a plurality of sensor data records from a plurality of mobile network devices, wherein each sensor data record comprises horizontal coordinate data and elevation data; processing the plurality of sensor data records and the map of building locations to generate a set of building heights.

In other words, the present approach can be considered, for example, as a technique which allows for efficient and accurate determination of the current height of a plurality of buildings in a region. The approach does so by processing a map, which includes the locations of buildings in a region, together with data retrieved from a plurality of mobile network devices (e.g. mobile phones, tablets, hotspots, access points, cell sites etc.). In some examples, the map is retrieved from a remote server, in other examples the map is stored in a locally accessible memory. Each sensor data record from the mobile network devices includes both horizontal coordinate data and corresponding elevation data. It will be appreciated that from the horizontal coordinate data, the sensor data record can be located within the map of the region and the elevation data can be used to determine the height of the building at that location. The technique thereby provides a technique which can establish the height of all the buildings in a region using a map that only contains information on the horizontal location (e.g. 2D coordinates) of the buildings without the need for a map with any height or terrain information. Such maps are widely available and inexpensive for most regions around the world. The technique also allows for an accurate determination of actual current building height and not a historic or planned height. The heights of buildings can be straightforwardly updated over time as new sensor data records from mobile network devices are received.

Viewed from one perspective, there is provided a computer program for controlling a device to perform any of the above-described methods. In some examples, the computer program is encoded on a computer-readable medium.

Viewed from one perspective, there is provided a device comprising: a processor and data storage, the device being configured to perform any of the above-described methods.

Other aspects will also become apparent upon review of the present disclosure, in particular upon review of the Brief Description of the Drawings, Detailed Description and Claims sections.

### BRIEF DESCRIPTION OF THE DRAWINGS

Examples of the disclosure will now be described, by way of example only, with reference to the accompanying drawings in which:
Figure 1: Schematically illustrates a method for determining the height of a plurality of buildings in a region.
Figure 2: Schematically illustrates a map of building locations.
Figure 3: Schematically illustrates a data table depicting a plurality of sensor data records collected from a plurality of mobile network devices.
Figure 4: Schematically illustrates a map of building locations with the height of the buildings superimposed on a per-structure basis.
Figure 5: Schematically illustrates a method for deriving elevations from barometric sensor data.
Figure 6: Schematically illustrates methods for deriving the absolute height of buildings in the region.
Figure 7: Schematically illustrates a method for identifying clusters in elevation associated with each building.
Figure 8: Schematically illustrates an example chart of data points showing the exclusion of outliers and the clustering process.
Figure 9: Schematically illustrates a method for generating a cell site deployment plan.
Figure 10: Schematically illustrates an example three-dimensional map which shows MNO performance characteristics with potential locations for deploying additional cell sites.
Figure 11: Schematically illustrates a cross section of a building which shows variation in mobile network characteristics and a potential location for an additional cell site.
Figure 12: Schematically illustrates an example of an electronic device which can be used to implement teachings of the disclosure.

While the disclosure is susceptible to various modifications and alternative forms, specific example approaches are shown by way of example in the drawings and are herein described in detail. It should be understood however that the drawings and detailed description attached hereto are not intended to limit the disclosure to the particular form disclosed but rather the disclosure is to cover all modifications, equivalents and alternatives falling within the spirit and scope of the claimed invention.

It will be recognised that the features of the above-described examples of the disclosure can conveniently and interchangeably be used in any suitable combination.

### DETAILED DESCRIPTION

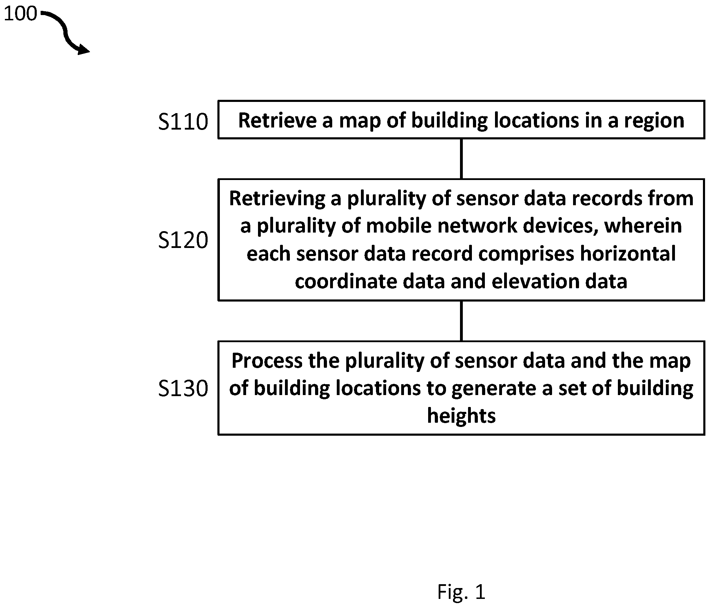

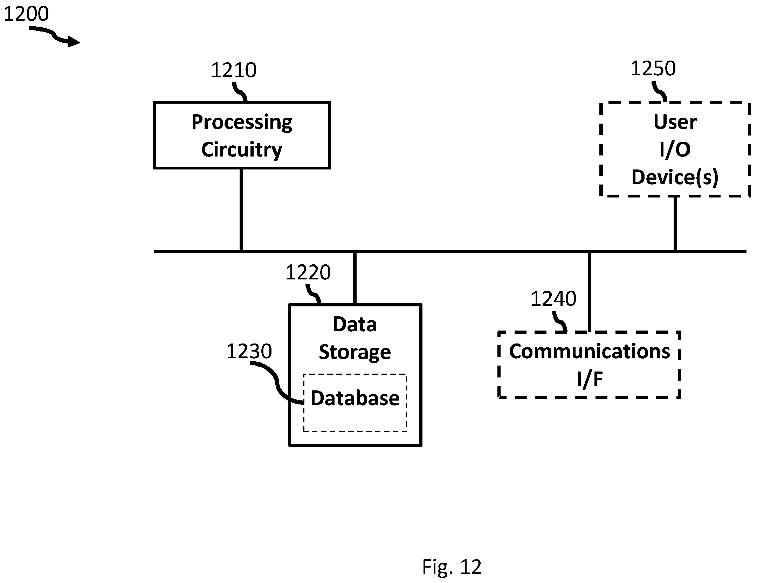

Figure 1 shows a schematic illustration of a method 100 for determining the height of a plurality of buildings in a region. It will be understood that method 100 can be performed using the electronic device of the type shown in Figure 12. The method includes the following steps.

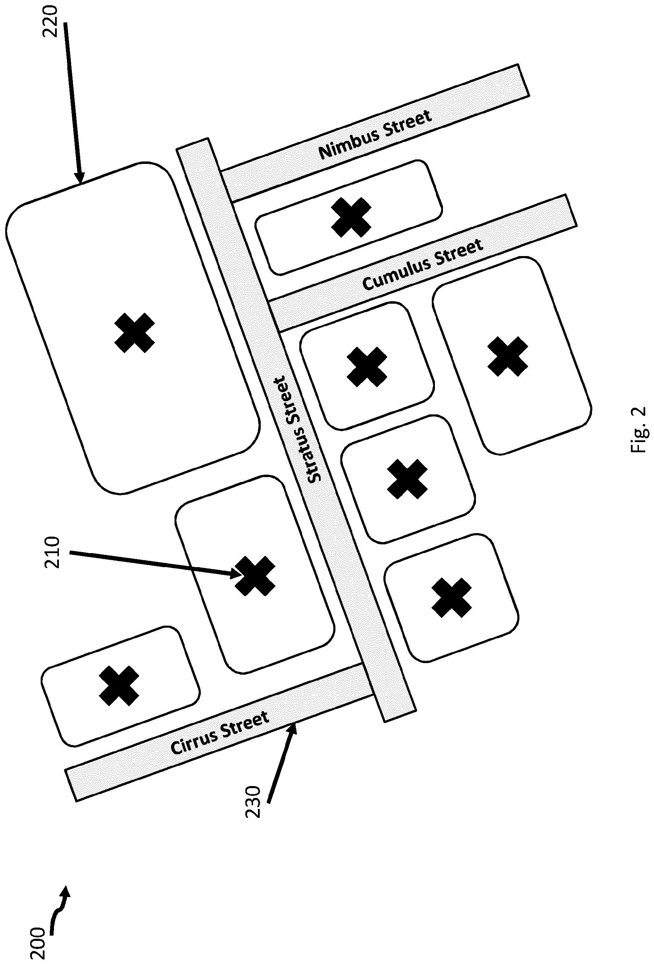

At step S110, the method retrieves a map of building locations in a region. In some examples, the map of building locations in a region can be similar to that depicted in Figure 2. It will be appreciated that the map of building locations in a region need only include the building locations and need not include all of the information depicted in Figure 2. In particular, the map need not show building footprints and need only identify the building location. The method then continues to step S120.

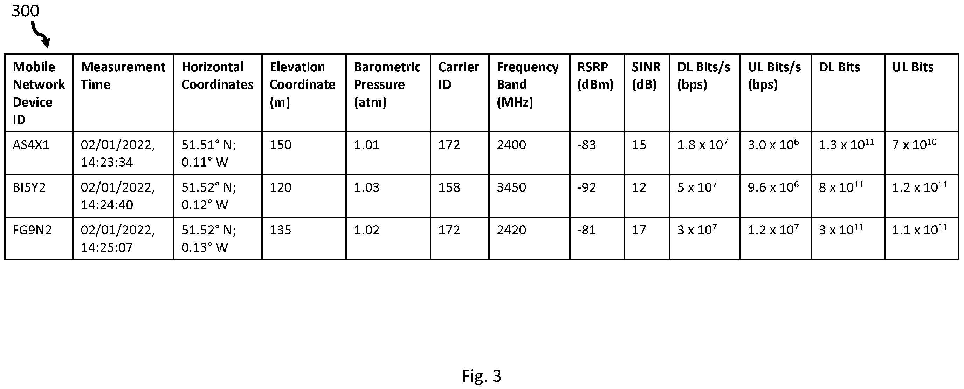

At step S120, the method retrieves a plurality of sensor data records from a plurality of mobile network devices, wherein each sensor data record comprises horizontal coordinate data and elevation data. In some examples, the sensor data records can be similar to those depicted in Figure 3. It will be appreciated that the sensor data records need only include horizontal coordinate data and data which provides information on elevation/altitude, for example barometric pressure and/or elevation coordinate(s). In particular, it need not include all of the fields depicted in Figure 3. In some examples, the plurality of sensor data records comprises more than 1 billion measurements. By collecting a large quantity of data, across a range of times and from a plurality of spatially separated devices, can allow the method to achieve a high spatial resolution with good accuracy (e.g. variations in data cause by changing environmental conditions can be averaged out).

In some examples, the horizontal coordinate data comprises satellite-navigation system sensor data. Thereby a direct measure of horizontal location in provided that is computationally efficient to use. In other examples, the horizontal coordinate data comprises WiFi and/or Bluetooth signal data. Thereby, horizontal locations can be determined even where a clear signal of the sky is not available. The WiFi and/or Bluetooth signal data can be processed into location data by accessing a database which contains the locations of where WiFi/Bluetooth transmitters are situated. It will be appreciated that WiFi/Bluetooth signal data can be used in combination with satellite-navigation system data to enhance horizontal location accuracy. Example satellite-navigation systems include: United States' Global Positioning System (GPS), Russia's Global Navigation Satellite System (GLONASS), China's BeiDou Navigation Satellite System, the European Union's Galileo, Japan's Quasi-Zenith Satellite System (QZSS), and India's Regional Navigation Satellite System (IRNSS). It will be appreciated, that the present techniques can be used with any satellite-navigation system or any combination of satellite-navigation systems.

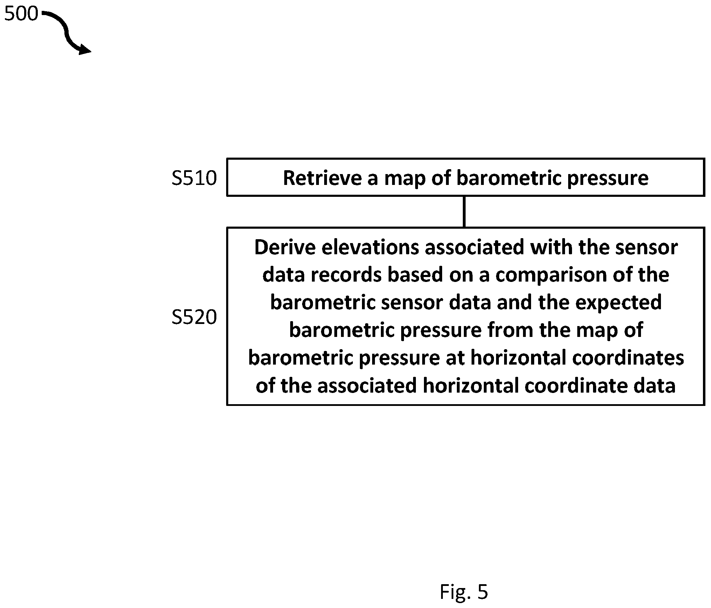

In some examples, the elevation data comprises satellite-navigation system sensor data. Thereby a direct measure of elevation is provided that is computationally efficient to use. In other examples, the elevation data comprises barometric sensor data. Thereby an indication of elevation can be provided even when there isn't a clear view of the sky. Such barometric sensor data can be converted to provide an estimate of elevation data since pressure decreases with increasing altitude in a known manner. Further discussion of techniques used in some examples to convert barometric sensor data to elevations/altitudes is discussed together with Figure 5 below. It will be appreciated that barometric sensor data can be used in combination with satellite-navigation system sensor data to enhance the accuracy of the elevation data.

The method then continues to step S130.

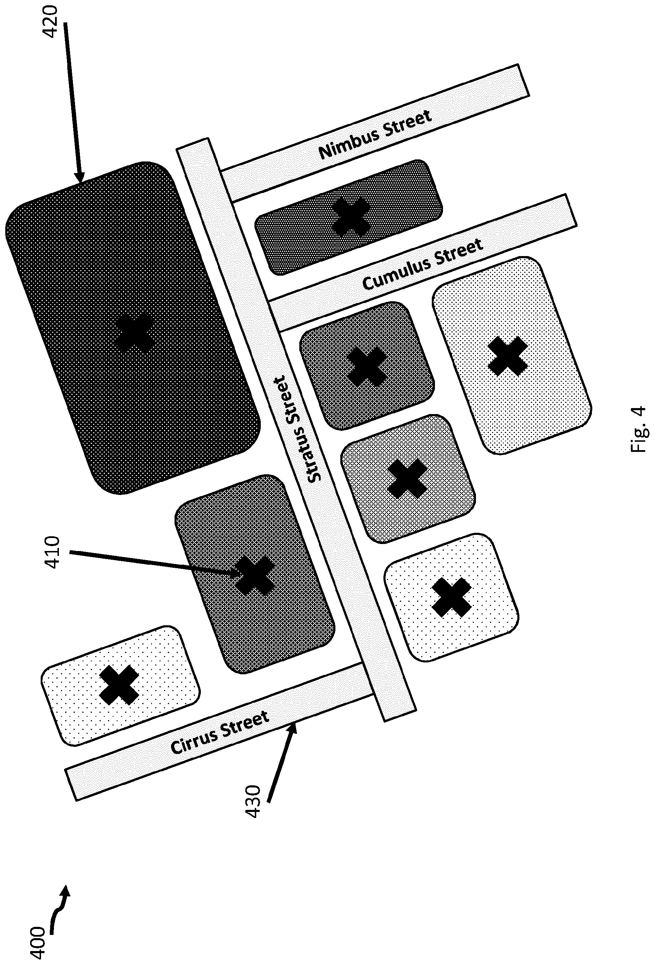

At step S130, the method processes the plurality of sensor data and the map of building locations to generate a set of building heights. Thereby the method is able to automatically generate a set of building heights in a region. In some examples, the building height is the height of the building from its base to its top. In other examples, the building height is the elevation above sea level of the top of the building. It will be appreciated that in some examples, the set of building heights can be depicted as a map. Any example such map is shown in Figure 4 where the height of buildings is superimposed on a per-structure basis. It will be appreciated that this map may only show the height of buildings, and need not show the other detail depicted in Figure 4.

The present example depicts step S120 being performed after step S110, however, it will be appreciated that in other examples step S110, is performed after step S120.

Figure 2, schematically illustrates a map of building locations. The spatial map 200 depicts a plurality of building locations 210 (represented by an X), a plurality of building footprints 220, and a plurality of streets 230. As mentioned above, the map need only contain the building locations 210. It will be appreciated that the buildings are not necessarily limited to structures suitable for permanent habituation but can include substantially any structure where mobile network devices are used.

In some examples, the map of building locations comprises horizontal coordinates of the building locations. The horizontal (e.g. two-dimensional) coordinates can be represented as longitude and latitude, a planar coordinate system. or any other coordinate systems usable to locate the relative ground positions of buildings in a region. Thereby, a map is provided which requires a low amount of memory. In some examples, the processing ascribes each sensor data record to the nearest building coordinate on the map. In other examples, the processing ascribes each sensor data record to the nearest building coordinate on the map when the distance is less than a maximum value, for example, a value selected to correspond to (estimated) typical building widths in that region.

In some examples, the map of building locations comprises terrain elevation in the region. Thereby data is provided that allows for straightforward calculation of the absolute height of the buildings by comparing the known ground level at their base to the calculated top of the buildings.

In some examples, the map of building locations comprises building footprint data. Thereby each sensor data record can be accurately ascribed to a building based on whether it lies within a specific building's footprint data.

Figure 3 schematically illustrates a data table 300 depicting a plurality of sensor data records collected from a plurality of mobile network devices. In the present example, the each sensor data record in the table includes: mobile network device ID, measurement time, horizontal coordinates, elevation coordinate, barometric pressure, carrier ID, frequency band, RSRP, SINR, download (DL) bit/s, upload (UL) bits/s, DL bits and UL bits. Illustrative example values are shown in table 300. It will be appreciated that the all data depicted will not necessarily collected and indeed different mobile network devices may collect different information. For example, data collected by a small cell may be more detailed, and include more fields, than data collected by a User Equipment (UE) device (e.g. a mobile phone). In some examples, the sensor data collected may be limited just to a horizontal location and elevation data (e.g. elevation coordinate and/or barometric pressure).

Figure 4 schematically illustrates a map of building locations with the height of buildings superimposed on a per-structure basis. The spatial map 400 depicts a plurality of building locations 410, a plurality of building footprints 420, and a plurality of streets 430. As can be seen, the building footprints 420 have different degrees of shading. In the present example, darker shading indicates greater building height. It will be appreciated that in other examples other visual forms could be used to indicate building height including different patterns, colour coding, or direct labelling with text.

Figure 5 schematically illustrates a method 500 for deriving elevations from barometric sensor data. It will be appreciated that method 500 can be performed using the electronic device of the type shown in Figure 12 and can, in some examples, be performed in conjunction with method 100. The method includes the following steps.

At step S510, the method retrieves a map of barometric pressure. It will be appreciated that this map can include a temporal aspect such that the barometric pressure at the time that a sensor data record was produced can be determined. The method than continues to step S520.

At step S520, the method derives elevations associated with the sensor data records based on a comparison of the barometric sensor data and the expected barometric pressure from the map of barometric pressure at horizontal coordinates of the associated horizontal coordinate data. As mentioned above, in some examples, this derivation can include matching the time of the barometric pressure map and the time of sensor data record. This allows for an enhanced accuracy in determining elevation as the elevation component of barometric pressure can be separated from the weather component of barometric pressure. It will, however, be appreciated that an estimate of elevation can be determined without a map of barometric pressure by, for example, instead using as the "baseline" pressure a static barometric pressure (e.g. sea level pressure or local average pressure) or by tracking relative changes in a given mobile network device's measured barometric pressure (e.g. the rapid drop in pressure as a mobile network device ascends a building).

In some examples, the entirety of method 500 can be performed before or after either of step S110 or step S120 of method 100. In other examples, method 100 and method 500 can be interleaved such that step S510 can be performed before or after either of step S110 or step S120 of method 100 and step S520 can be at any point after S510 but before step S130.

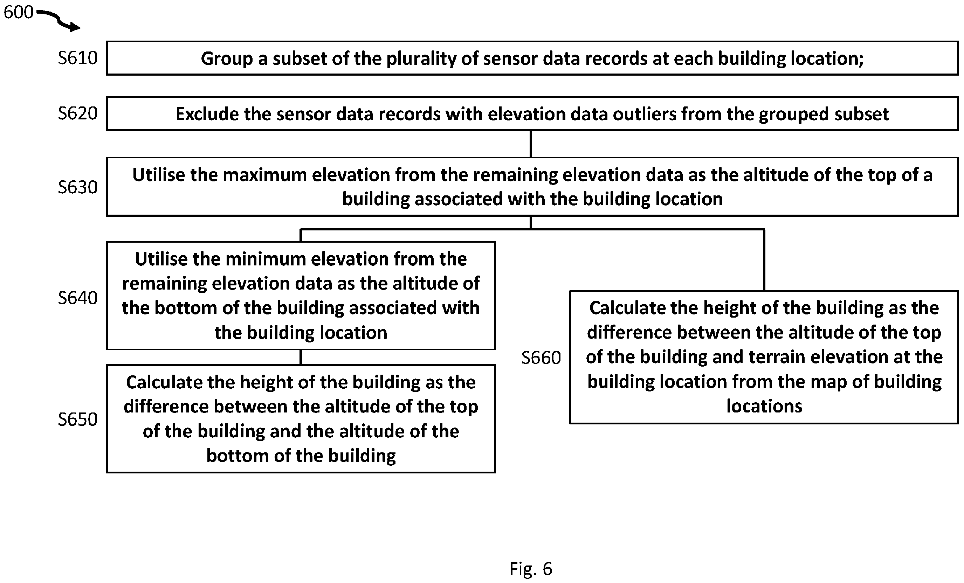

Figure 6 schematically illustrates multiple methods 600 for deriving the absolute height of buildings in the region. It will be appreciated that method 600 can be performed using the electronic device of the type shown in Figure 12. In some examples, method 600 can be considered as providing certain further details of how step S130 of method 100 can be implemented. In some examples, method 600 can be performed in conjunction with method 500. The method includes the following steps.

At step S610, the method groups a subset of the plurality sensor data records at each building location. In other words, the method selects the sensor data records, from the plurality of sensor data records, that are associated with a building location. Further discussion of how a sensor data record is ascribed to a particular building is discussed above in the discussion of Figure 2. The method then continues to step S620.

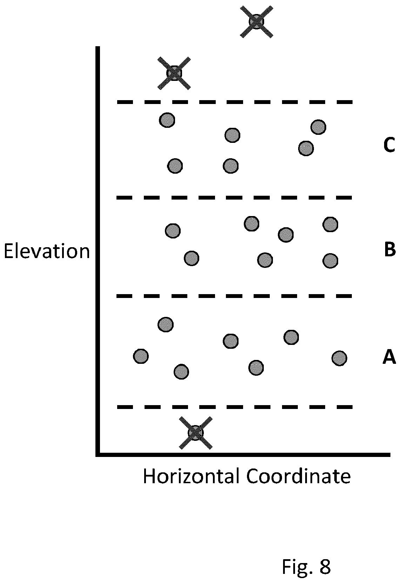

At step S620, the method excludes sensor data records with elevation data outliers from the grouped subset. In some examples, the method excludes the 1%, 2%, 5% or 10% most extreme values as these are the values most likely to be erroneous thereby enhancing accuracy. Figure 8 shows an example chart of data points which highlights three outliers being excluded, two from the top of the building and one from the bottom. The method then continues to step S630.

At step S630, the method utilises the maximum elevation from the remaining elevation data (i.e. once the outliers have been excluded) as the altitude of the top of a building associated with the building location. Thereby the method allows for the accurate elevation of the top of buildings in the region to be established as the data most likely to be erroneous is excluded. In some examples the method continues to step S640. In some other examples the method continues to step S660.

At step S640, the method utilises the minimum elevation from the remaining elevation data as the altitude of the bottom of the building associated with the building location. The method then continues to step S650.

At step S650, the method calculates the height of the building as the difference between the altitude of the top of the building and the altitude of the bottom of the building. Thereby, the method is able calculate the "absolute" height of each building (i.e. how high the building projects above the ground) without requiring any pre-existing elevation information. As with the automatic determination of the height of the top of the building, the automatic determination of the height of the bottom of the building by excluding outlying data enhances accuracy by excluding the data most likely to be erroneous. While step S640 has been depicted as following step S630 it will be appreciated that step S640 can be performed prior to step S630.

As set out above, in other examples the method continues to step S660 after S630. In these other examples, the map of building locations comprises terrain elevation in the region. At step S660, the method calculates the height of the building as the difference between the altitude of the top of the building and the terrain elevation at the building location from the map of building locations. Thereby, the need to calculate the height at the base of the building is avoided thus allowing for an accurate determination of the absolute building height. As identified by the present inventors, in many locales around the world terrain data is readily available when building height data is not.

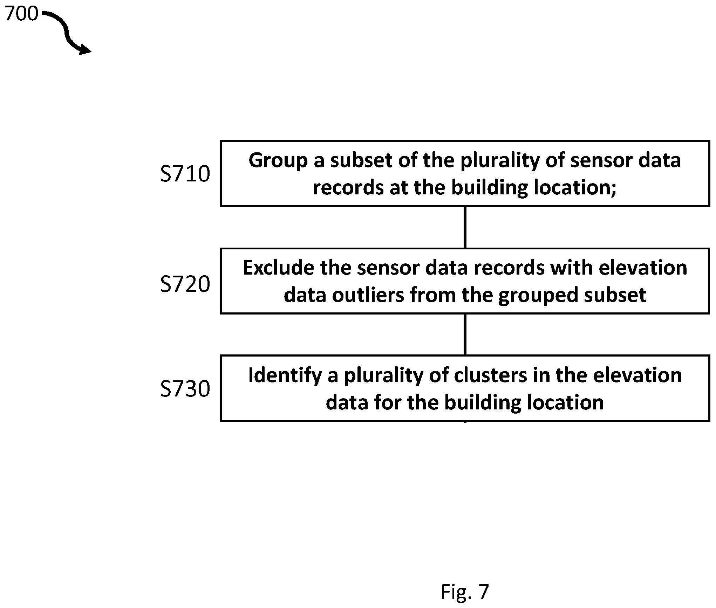

Figure 7 schematically illustrates a method (700) for identifying clusters in elevation associated with each building. It will be appreciated that method 600 can be performed using the electronic device of the type shown in Figure 12. In some examples, method 600 can be considered as providing certain further details of how step S130 of method 100 can be implemented and may be performed additionally, or alternatively, with the certain further details of how step S130 can be implemented provided by method 600. In some examples, method 700 can be performed in conjunction with method 500. The method includes the following steps.

At step S710, the method groups a subset of the plurality of sensor data records at the building location. In some examples, step S710 is substantially similar to step S610. Further discussion of how a sensor data record is ascribed to a particular building is discussed above in the discussion of Figure 2. The method then continues to step S720.

At step S720, the method excludes the sensor data records with elevation data outliers from the grouped subset. In some examples, step S720 is substantially similar to step S620. In some examples, the method excludes the 1%, 2%, 5% or 10% most extreme values as these are the values most likely to be erroneous thereby enhancing accuracy. Figure 8 shows an example chart of data points which highlights three outliers being excluded, two from the top of the building and one from the bottom. The method then continues to step S730.

At step S730, the method identifies a plurality of clusters in the elevation data for the building. Thereby the method can automatically identify vertical divisions in the building location useful for dividing the sensor data into associated chunks. In some examples, each cluster corresponds to one or more floors at the building location. Thereby, a clustering can be provided that corresponds with how people use the building. In other examples, the height of each cluster corresponds to the effective range of a transmitter, for example a small cell of a mobile phone network, or that of a WiFi base station. Thereby, the cluster size can assist with producing a deployment plan for transmitters that would ensure that locations identified for the transmitters take account performance characteristics of the transmitter(s). An example of clustering is shown in figure 8. In some examples, clustering parameters are set to produce clusters of the desired size.

Figure 8 shows a schematic illustration of an example chart of data points showing the exclusion of outliers and the clustering process. As can be seen, the Y axis corresponds to elevation and the X axis corresponds to a horizontal coordinate. For the purposes of this example, all data points are assumed to be from sensor data records grouped as a single building location. As can be seen, three points have been excluded as outliers, two at the top of the building and one at the bottom. The remaining data has then been clustered into three clusters: A, B and C.

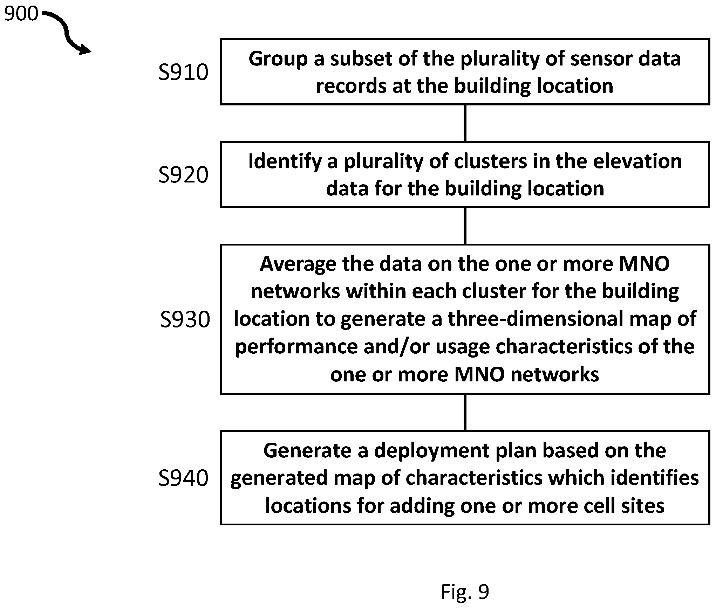

Figure 9 shows a schematic illustration of a method 900 for generating a cell site deployment plan. It will be understood that method 900 can be performed using the electronic device of the type shown in Figure 12. In some examples, method 900 can be considered as providing certain further details of how step S130 of method 100 can be implemented and may be performed additionally, or alternatively, with the certain further details of how step S130 can be implemented provided by method 600 and/or by method 700. In some examples, method 900 can be performed in conjunction with method 500.

When the method 900 is performed, as well as in some other examples, the sensor data records further comprise data on one or more Mobile Network Operator (MNO) networks. This thereby allows for network metrics to be collected and ascribed to a particular building of identified height. In some examples, the data on one or more MNO networks comprises one or more of frequency band, a measure of the signal power received (e.g. RSRP), a measure of signal to noise (e.g. SINR), a measure of percentage dropped traffic, a measure of average traffic (e.g. DL bits/s and/or UL bits/s), a measure of peak traffic (e.g. DL bits/s and/or UL bits/s), a measure of total traffic over a period (e.g. DL bits, UL bits) or an amalgamation of any of the above measures to produce an overall score (e.g. a summation of the various measures as compared to base reference values). The method 900 includes the following steps.

At step S910, the method groups a subset of the plurality sensor data records at the building locations. In some examples, step S910, is substantially similar to step S610 and/or step s710. Further discussion of how a sensor data record is ascribed to a particular building is discussed above in the discussion of Figure 2. The method then continues to step S920.

At step S920, the method identifies a plurality of clusters in the elevation data for the building location. In some examples, step S920 is substantially similar to step S620 and/or step s720. In some examples, the method excludes the 1%, 2%, 5% or 10% most extreme values as these are the values most likely to be erroneous thereby enhancing accuracy. Figure 8 shows an example chart of data points which highlights three outliers being excluded, two from the top of the building and one from the bottom. The method then continues to step S930.

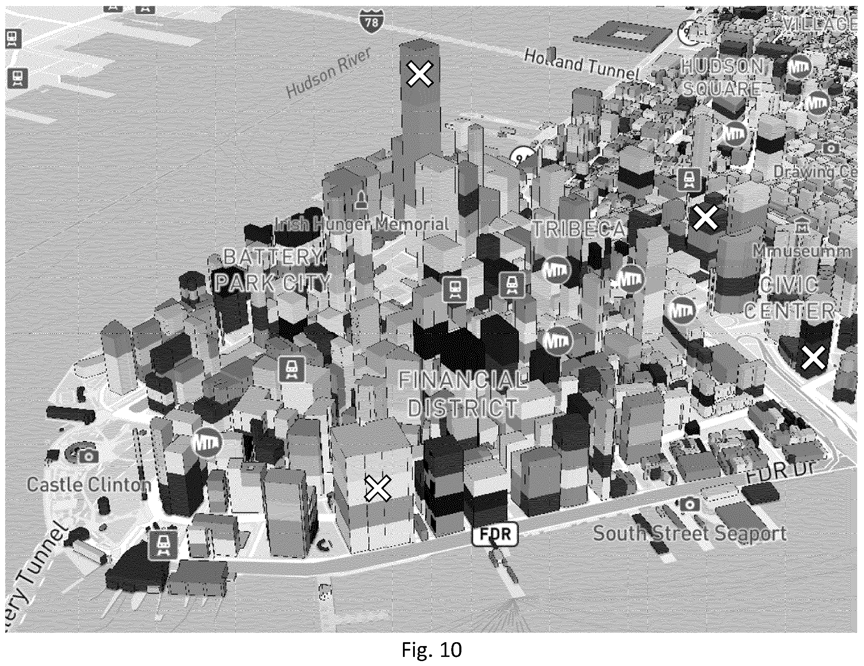

At step S930, the method averages the data on the one or more MNO networks within each cluster for the building location to generate a three-dimensional map of performance and/or usage characteristics of the one or more MNO networks. Thereby a 3D map of MNO performance/usage characteristics can be generated. An example three-dimensional map of performance and/or usage characteristics is shown in figure 10. In some examples, the method then continues to step S940.

At step S940, the method generates a deployment plan based on the generated map of characteristics which identifies locations for adding one or more cell sites. In some examples, the deployment plan identifies three-dimensional locations where the one or more MNO networks have one or more poor performance characterises. Thereby the deployment plan allows for the poor performance characteristics to be more efficiently ameliorated through the use of three-dimensional placement than would be possible just through two-dimensional horizontal placement. Figure 10 shows an example of a map which identifies a three-dimensional deployment plan.

In some examples, the one or more cell sites are one or more small cell sites. These can be easier and quicker to deploy than macrocells and can be deployed indoors. In some examples, a small cell can be deployed by a non-specialist and its connectivity can be supplied using a regular broadband internet connection.

In some examples, the sensor data records comprise data on a plurality of MNO networks and the map of characteristics is generated for each MNO network, and wherein the deployment plan specifies locations for the one or more cell sites where two or more of the MNO networks have one or more poor performance characteristics. Thereby, the deployment plan can identify locations where there is collective poor performance across a plurality of MNO networks. In some examples, the deployment plan can address the collective poor performance across the MNO networks through a cell device utilising shared spectrum or otherwise sharing MNO access.

In some examples, the characteristics comprise coverage, signal quality, percentage dropped traffic, average traffic, peak traffic and/or network usage. Thereby a spatial map of useful characteristics exhibited in the real-world is provided which can be more useful and accurate than theoretical versions.

In some examples, when grouping the subset of the plurality of sensor data at the building location (e.g. at step S610, step S710 and/or step S910), where the map of building locations comprises building footprint data, the grouping is performed using the building footprint data. Thereby the sensor data records lying within the building footprint being grouped ensure that the data is utilised and/or presented is on a per-building basis in the horizontal plane.

As mentioned above, Figure 10 schematically illustrates an example three-dimensional map which shows MNO performance characteristics with potential locations for deploying additional cell sites. More specifically, the figure shows a three-dimensional view looking out over a cityscape. The map shows the buildings with the automatically generated heights according to the methods described above. The map additionally shows the buildings divided into clusters, with each cluster shaded according to an MNO network performance characteristic. A deployment plan for potential cell site deployments is shown superimposed in three-dimensions as four X's.

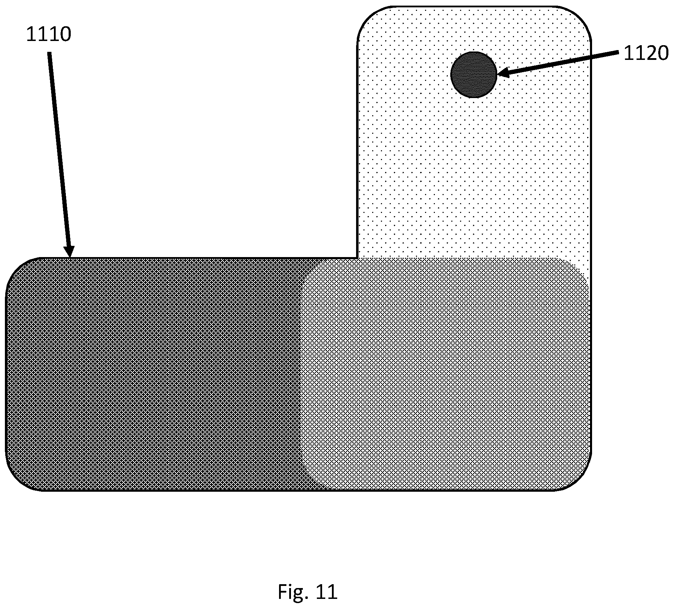

Figure 11 schematically illustrates a cross section (e.g. a floor) of a building which shows variation in mobile network characteristics and a potential location for an additional cell site. More specifically, the figure shows a building footprint 1110. Inside this building footprint, the variation of a MNO network performance characteristic is indicated with shading, with better performance shown in darker shading. In the poor performance region (i.e. light shading) a potential location for an additional cell site 1120 is depicted.

In some examples, each building location is sub-divided into a plurality of regions in the horizontal plane (e.g. as shown in Figure 11) and the sensor data records for each region of the building location is separately processed. Thereby data can be separately generated within each building at a finer grain than per-building in the horizontal plane. Further, when used with the techniques described above to generate a deployment plan, three-dimensional locations within individual buildings can be identified thus allowing for more performant deployment.

Figure 12 schematically illustrates an example of an electronic device 1200 which can be used to implement teachings described above, including method 100, method 500, method 600, method 700 and method 900.

The electronic device 1200 has processing circuitry 1210 for performing data processing in response to program instructions and data storage 1220 for storing data and instructions to be processed by the processing circuitry 1210. In some examples, the processing circuitry 1210 includes one or more caches for caching recent data or instructions. The data storage 1220 may have a database 1230 which can, for example, store sensor data records or environmental conditions. It will be appreciated that Figure 12 is merely an example of possible hardware that may be provided in the device and other components may also be provided. For example, the device may include a communications interface 1240 which can be used to retrieve sensor data records from a plurality of mobile network devices. The device 1200 may additionally or alternatively be provided with one or more user input/output device(s) 1250 to receive input from a user (e.g. parameters to determine information for a deployment plan) or to output information (e.g. a spatial map of MNO network characteristics and/or a deployment plan) to a user.

The methods discussed above may be performed under control of a computer program executing on a device. Hence a computer program may comprise instructions for controlling a device to perform any of the methods discussed above. The program can be encoded in a computer-readable medium. A computer-readable medium may include non-transitory type media such as physical storage media including storage discs and solid state devices. A computer-readable medium may also or alternatively include transient media such as carrier signals and transmission media. A computer-readable storage medium is defined herein as a non-transitory memory device. A memory device includes memory space within a single physical storage device or memory space spread across multiple physical storage devices.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

Although illustrative teachings of the disclosure have been described in detail herein with reference to the accompanying drawings, it is to be understood that the invention is not limited to those precise teachings, and that various changes and modifications can be effected therein by one skilled in the art without departing from the scope and spirit of the invention as defined by the appended claims.

Further examples of feature combinations taught by the present disclosure are set out in the following numbered clauses:
1. A computer-implemented method for determining the height of a plurality of buildings in a region, the method comprising:
   retrieving a map of building locations in the region;
   retrieving a plurality of sensor data records from a plurality of mobile network devices, wherein each sensor data record comprises horizontal coordinate data and elevation data;
   processing the plurality of sensor data records and the map of building locations to generate a set of building heights.
2. The method of clause 1, wherein the map of building locations comprises horizontal coordinates of the building locations.
3. The method of clause 1 or clause 2, wherein the map of building locations comprises terrain elevation in the region.
4. The method of any preceding clause, wherein the map of building locations comprises building footprint data.
5. The method of any preceding clause, wherein the horizontal coordinate data comprises satellite navigation system sensor data.
6. The method of any preceding clause, wherein the horizontal coordinate data comprises WiFi and/or Bluetooth signal data.
7. The method of any preceding clause, wherein the elevation data comprises satellite navigation system sensor data.
8. The method of any preceding clause, wherein the elevation data comprises barometric sensor data.
9. The method of any preceding clause, wherein the plurality of sensor data records comprises more than 1 billion measurements.
10. The method of any preceding clause, wherein the elevation data comprises barometric sensor data, the method further comprising:
   retrieving a map of barometric pressure; and
   deriving elevations associated with the sensor data records based on a comparison of the barometric sensor data and the expected barometric pressure from the map of barometric pressure at horizontal coordinates of the associated horizontal coordinate data.
11. The method of any preceding clause, wherein the processing comprises, for each building location:
   grouping a subset of the plurality of sensor data records at the building location;
   excluding the sensor data records with elevation data outliers from the grouped subset; and
   utilising the maximum elevation from the remaining elevation data as the altitude of the top of a building associated with the building location.
12. The method of clause 11, wherein the processing comprises, for each building location:
   utilising the minimum elevation from the remaining elevation data as the altitude of the bottom of the building associated with the building location; and
   calculating the height of the building as the difference between the altitude of the top of the building and the altitude of the bottom of the building.
13. The method of clause 11, wherein the map of building locations comprises terrain elevation in the region, and wherein the processing comprises calculating the height of the building as the difference between the altitude of the top of the building and terrain elevation at the building location.
14. The method of any preceding clause, wherein the processing comprises, for each building location:
   grouping a subset of the plurality of sensor data records at the building location;
   excluding the sensor data records with elevation data outliers from the grouped subset; and
   identifying a plurality of clusters in the elevation data for the building location.
15. The method of clause 14, wherein each cluster corresponds to one or more floors at the building location.
16. The method of any preceding clause, wherein the sensor data records further comprises data on one or more MNO networks.
17. The method of clause 16, wherein the data on one or more MNO networks comprises one or more of frequency band, RSRP, SINR, DL bits/s, UL bits/s, DL bits, UL bits and carrier identification.
18. The method of clause 16 or clause 17, wherein the processing comprises, for each building location:
   grouping a subset of the plurality of sensor data records at the building location;
   identifying a plurality of clusters in the elevation data for the building location; and
   averaging the data on the one or more MNO networks within each cluster for the building location to generate a three-dimensional map of performance and/or usage characteristics of the one or more MNO networks.
19. The method of clause 18, further comprising generating a deployment plan based on the generated map of characteristics which identifies locations for adding one or more cell sites.
20. The method of clause 19, wherein the one or more cell sites are one or more small cell sites.
21. The method of clause 19 or clause 20, wherein the deployment plan specifies locations for the one or more cell sites where one or more MNO networks have one or more poor performance characteristics.
22. The method of clause 21, wherein the sensor data records comprise data on a plurality of MNO networks and the map of characteristics is generated for each MNO network, and wherein the deployment plan specifies locations for the one or more cell sites where two or more of the MNO networks have one or more poor performance characteristics.
23. The method of any of clauses 18 to 22, wherein the characteristics comprise coverage, signal quality, percentage dropped traffic, average traffic, peak traffic and/or network usage.
24. The method of any of clauses 11 to 15, 18 to 23, wherein the map of building locations comprises building footprint data, and wherein the grouping the subset of the plurality of sensor data records at the building location is performed using the building footprint data.
25. The method of any of clauses 11 to 15, 18 to 24, wherein each building location is sub-divided into a plurality of regions in the horizontal plane and the sensor data records for each region of the building location is separately processed.
26. A computer program to control a device to perform the method of any preceding clause.
27. At least one computer-readable medium comprising the computer program of clause 26.
28. A device comprising a processor and data storage, the device configured to perform the method of any of clauses 1 to 25.

## Claims

1. A computer-implemented method for determining the height of a plurality of buildings in a region, the method comprising:
retrieving a map of building locations in the region;
retrieving a plurality of sensor data records from a plurality of mobile network devices, wherein each sensor data record comprises horizontal coordinate data and elevation data;
processing the plurality of sensor data records and the map of building locations to generate a set of building heights.

2. The method of claim 1, wherein the map of building locations comprises horizontal coordinates of the building locations and/or comprises terrain elevation in the region and/or comprises building footprint data.

3. The method of any preceding claim, wherein the horizontal coordinate data comprises satellite navigation system sensor data and/or comprises WiFi and/or Bluetooth signal data.

4. The method of any preceding claim, wherein the elevation data comprises satellite navigation system sensor data and/or comprises barometric sensor data.

5. The method of any preceding claim, wherein the elevation data comprises barometric sensor data, the method further comprising:
retrieving a map of barometric pressure; and
deriving elevations associated with the sensor data records based on a comparison of the barometric sensor data and the expected barometric pressure from the map of barometric pressure at horizontal coordinates of the associated horizontal coordinate data.

6. The method of any preceding claim, wherein the processing comprises, for each building location:
grouping a subset of the plurality of sensor data records at the building location;
excluding the sensor data records with elevation data outliers from the grouped subset; and
utilising the maximum elevation from the remaining elevation data as the altitude of the top of a building associated with the building location.

7. The method of claim 6, wherein the processing comprises, for each building location:
utilising the minimum elevation from the remaining elevation data as the altitude of the bottom of the building associated with the building location; and
calculating the height of the building as the difference between the altitude of the top of the building and the altitude of the bottom of the building.

8. The method of claim 6, wherein the map of building locations comprises terrain elevation in the region, and wherein the processing comprises calculating the height of the building as the difference between the altitude of the top of the building and terrain elevation at the building location.

9. The method of any preceding claim, wherein the processing comprises, for each building location:
grouping a subset of the plurality of sensor data records at the building location;
excluding the sensor data records with elevation data outliers from the grouped subset; and
identifying a plurality of clusters in the elevation data for the building location, optionally wherein each cluster corresponds to one or more floors at the building location.

10. The method of any preceding claim, wherein the sensor data records further comprises data on one or more MNO networks, optionally wherein the data on one or more MNO networks comprises one or more of frequency band, RSRP, SINR, DL bits/s, UL bits/s, DL bits, UL bits and carrier identification.

11. The method of claim 10, wherein the processing comprises, for each building location:
grouping a subset of the plurality of sensor data records at the building location;
identifying a plurality of clusters in the elevation data for the building location; and
averaging the data on the one or more MNO networks within each cluster for the building location to generate a three-dimensional map of performance and/or usage characteristics of the one or more MNO networks.

12. The method of claim 11, further comprising generating a deployment plan based on the generated map of characteristics which identifies locations for adding one or more cell sites,
optionally wherein the deployment plan specifies locations for the one or more cell sites where one or more MNO networks have one or more poor performance characteristics,
further optionally wherein the sensor data records comprise data on a plurality of MNO networks and the map of characteristics is generated for each MNO network, and wherein the deployment plan specifies locations for the one or more cell sites where two or more of the MNO networks have one or more poor performance characteristics.

13. The method of any of claims 6 to 9, 11 to 12, wherein the map of building locations comprises building footprint data, and wherein the grouping the subset of the plurality of sensor data records at the building location is performed using the building footprint data.

14. A computer-readable medium comprising computer-implementable instructions configured to cause a computer to carry out the method of any of claims 1 to 13.

15. A device comprising a processor and data storage, the device configured to perform the method of any of claims 1 to 13.
